(19) **Europäisches Patentamt / European Patent Office / Office européen des brevets**

(11) **EP 4 538 907 B1**

(12) **EUROPEAN PATENT SPECIFICATION**

(45) Date of publication and mention
of the grant of the patent:
**03.09.2025  Bulletin 2025/36**

(21) Application number: **23306766.9**

(22) Date of filing: **11.10.2023**

(51) International Patent Classification (IPC):
**G06F 17/17** $^{(2006.01)}$  **G06N 3/126** $^{(2023.01)}$

(52) Cooperative Patent Classification (CPC):
**G06F 17/17;** G06N 3/126

(54) **AUTOMATIC IDENTIFICATION OF REQUIRED INTERNAL ACCURACIES OF ARBITRARY FUNCTIONS CALLS DEPENDING ON A PROGRAM GLOBAL TARGET ACCURACY ON AN ARBITRARY PROGRAM**

**AUTOMATISCHE IDENTIFIZIERUNG DER ERFORDERLICHEN INTERNEN GENAUIGKEITEN VON ANRUFEN WILLKÜRLICHER FUNKTIONEN IN ABHÄNGIGKEIT VON EINER GLOBALEN ZIELGENAUIGKEIT EINES PROGRAMMS AUF EINEM BELIEBIGEN PROGRAMM**

**IDENTIFICATION AUTOMATIQUE D'ACCUMULATIONS INTERNES REQUISES D'APPELS DE FONCTIONS ARBITRAIRES EN FONCTION D'UNE PRÉCISION DE CIBLE GLOBALE DE PROGRAMME SUR UN PROGRAMME ARBITRAIRE**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(43) Date of publication of application:
**16.04.2025  Bulletin 2025/16**

(73) Proprietors:
• **Mitsubishi Electric R&D Centre Europe B.V.**
**1119 NS  Schiphol Rijk Amsterdam (NL)**
Designated Contracting States:
**FR**
• **MITSUBISHI ELECTRIC CORPORATION**
**Chiyoda-ku**
**Tokyo 100-8310 (JP)**
Designated Contracting States:
**AL AT BE BG CH CY CZ DE DK EE ES FI GB GR HR HU IE IS IT LI LT LU LV MC ME MK MT NL NO PL PT RO RS SE SI SK SM TR**

(72) Inventors:
• **FAISSOLE, Florian**
**35708 Rennes Cedex 7 (FR)**
• **BOYER, Benoit**
**35708 Rennes Cedex 7 (FR)**

(74) Representative: **Plasseraud IP**
**104 Rue de Richelieu**
**CS92104**
**75080 Paris Cedex 02 (FR)**

(56) References cited:
**EP-A1- 4 235 397**

• **LEIPNITZ MARCOS T MTLEIPNITZ@INF UFRGS BR ET AL: "High-Level Synthesis of Approximate Designs under Real-Time Constraints", ACM TRANSACTIONS ON EMBEDDED COMPUTING SYSTEMS, ACM, NEW YORK, NY, US, vol. 18, no. 5s, 7 October 2019 (2019-10-07), pages 1 - 21, XP058901497, ISSN: 1539-9087, DOI: 10.1145/3358182**
• **BRIGGS IAN ET AL: "Choosing mathematical function implementations for speed and accuracy", CREATIVITY AND COGNITION, ACMPUB27, NEW YORK, NY, USA, 9 June 2022 (2022-06-09), pages 522 - 535, XP059036886, ISBN: 978-1-4503-9343-0, DOI: 10.1145/3519939.3523452**

## Description

## TECHNICAL FIELD

The present disclosure relates to computer program development and more specifically to a method and system for identifying required internal accuracies of mathematical functions of a computer program achieving a target global accuracy. The target global accuracy corresponds to the upper bound of a total error, itself depending on mathematical function approximations and floating-point rounding errors. The present disclosure also relates to a method for evaluating the time- and resource-efficiency of the computer program execution, relative to the identified internal accuracies.

## BACKGROUND ART

Numerical calculations are used extensively in a variety of industrial fields, including signal and image processing, or for embedded systems for automotive or nuclear plants control, etc.

Such calculations are however subject to inherent computation errors, due to the finite precision of computer arithmetic. Indeed, computer programs do not use ideal and real mathematical numbers but floating-point approximations introducing rounding errors. For example, the approximate exponential exacerbates the errors on their inputs, and conversely, the logarithmic function can mitigate rounding errors as it generally smooths the results.

Such approximations cumulate during the execution of the computer program which usually implements loops, and in such case, the errors become significant.

Moreover, mathematical function implementations can suffer from the physical model/system they describe such as trigonometric functions for instance, where cosine or sine functions can be approximated by polynomial functions with errors. In addition, numerical simulations are always based on simplified models of physical phenomena. For example, physical systems can be modelled with differential equations, which are solved by mathematical solvers (such as Runge-Kutta method), providing an approximation of the real solution.

These two sources of errors, i.e. the floating-point rounding errors and the mathematical functions approximations, constitute a total error. The total error is depending on the internal numerical accuracies of the mathematical function implementations in the computer program. However, the required internal accuracies from the global accuracy of the program are hard to predict, and it is thus difficult to ensure that the total error remains below a desired accuracy target for the program.

Previous techniques have proposed to target the verification of the numerical accuracy of computer programs, by using either empirical/stochastic techniques or based on formal verification methods. However, while these techniques can rely on the knowledge of the accuracy of elementary operations such as addition, subtraction, multiplication, and division (governed by the IEEE-754 standard), the implementations of mathematical functions, such as exponential, cosine, sine, etc., are generally dependent on the hardware makers, on the used libraries and the corresponding source code is not always accessible. The resulting implementations are thus often proprietary whose accuracy cannot be statically verified. The existing methods thus fail to provide systematic and universal solutions which are readily available.

One possible way to bypass this problem is to rely on known/owned implementations, for which the accuracy is known and guaranteed. Function synthesis techniques, combined with formal techniques, is one possibility, that has been the topic of a previous patent (EP4235397). Nonetheless, before synthesizing functions implementations with given required accuracies, it is required to identify these required internal accuracies from the target accuracy of the considered numerical program.

Furthermore, in numerical computation, the precision of the floating-point values has a direct impact on the efficiency and speed execution of the computer program. In fact, nominal implementations of functions in computer programs, i.e. the ones available in system libraries, are generally very accurate, but their computations are generally too expensive, therefore, too slow. In most cases, functions implementations with lower accuracies are sufficient and can lead to far better program performance, especially when the program contains a lot of functions calls. Hence, establishing the right balance between precision and computational cost of the computer program is another important aspect to consider.

Although current solutions make it possible to determine in some cases the total error and required internal accuracies, these methods do not establish the adequacy of the identified internal accuracies with the overall efficiency and resource consumption of the computer program.

## SUMMARY

The present disclosure aims at improving the situation. In particular, the present disclosure aims at overcoming at least some of the limitations of the prior art discussed above, by proposing a method for determining, automatically and efficiently, the required internal accuracies of mathematical functions of a computer program, relative to a global target accuracy. Also, in some embodiments at least, the present disclosure aims at proposing a method for evaluating an optimum efficiency of both higher-precision and lower computational costs of the computer program, relative to the identified internal accuracies. The proposed methodology thus relies on stochastic techniques to simulate the effects of several precision lowering combinations on the global accuracy of the program, to identify the lowest acceptable accuracies, while ensuring an optimal execution of the program. The target global accuracy corresponds to the computer program minimum acceptable accuracy, i.e. to the upper limit of an allowable total error.

For this purpose, and according to a first aspect, the present disclosure relates to a computer implemented method for determining required internal accuracies of at least one function, implemented in a computer program, to reach a target global accuracy of the computer program. The computer implemented method thus comprises at least one iteration of the following steps:

- lowering the precision of at least one reference implementation of the at least one function to obtain custom implementations, of the at least one function,
- obtaining errors induced by the precision lowering between the custom implementations and the reference implementations as a function of common input values,
- obtaining, as a function of said errors, a plurality of acceptable combinations of the custom implementations which allows meeting the target global accuracy of the computer program,
- evaluating an execution efficiency of at least one of said acceptable combinations as a function of at least one resource consuming criterion, said execution efficiency evaluation delivering the required internal accuracies of said at least one function when said at least one resource consuming criterion is met.

Thus, the computer implemented method ensures identifying a combination of accuracies of the different mathematical functions of a computer program that satisfies a global target accuracy (during the first three steps) while optimizing a given set of criteria (e.g., worst case execution time, resource usage, etc., during the last step).

To do so, the first aspect of the computer implemented method consists of evaluating the impact of lowering the accuracies of the different mathematical functions of the computer program, relative to the global target accuracy. For this, in a first step, the computer program is instrumented to be executed with *custom* precision functions, i.e. with lowered internal accuracy functions. This custom execution of the computer program results in custom outputs. Then, in a second step, the errors of the custom outputs are evaluated, and, in a third step, the internal accuracies are identified based on the said errors achieving the target global efficiency. In other words, these internal accuracies are a priori lower than the nominal accuracies, while maintaining a negligible error on the program result.

The second aspect of the computer implemented method is to assess whether these identified lowered internal accuracies also reduce the time and resource cost of the computer program execution, during a fourth step. Hence, during the fourth step, it is sought to find at least one best combination solution among the internal accuracies identified in the third step that achieve at least one resource consuming criterion. The best combination solution(s) thus constitute(s) the required internal accuracies of the computer program.

The computer implemented method may further comprise a preliminary step for determining reference errors, by comparing reference outputs of said at least one reference implementation with corresponding ideal outputs of ideal execution of said at least one function using the common input values.

The reference outputs result from nominal execution of the functions of the computer program, whose precision is nominal as defined in the program, for instance in single- or double-precision floating-point formats, and in which reference implementations, i.e., the ones available in e.g., system libraries, of the mathematical functions are used. The ideal outputs result from ideal execution of the functions, whose precision is supposed to be *infinite* and corresponding to the real mathematical result. As an infinite precision is not achievable, the ideal outputs correspond to higher-precision execution of the computer program, for instance double instead of single-precision and is computationally costly.

In specific embodiments, the precision lowering of first step further comprises introducing a random noise on values provided to or provided by the at least one reference implementation to obtain the custom implementations with custom outputs.

In specific embodiments, the errors determination of second step comprises calculating errors $\hat{e}$ and $\hat{c}$ as a function of said custom outputs and as a function of reference outputs.

In specific embodiments, the third step further comprises comparing a plurality of combinations of errors relative to the target global accuracy, wherein:

- when a combination of errors achieves the target global accuracy, the corresponding combination of custom implementations is an acceptable combination of custom implementations;
- when a combination of errors does not achieve the target global accuracy, the corresponding combination of custom implementations is rejected.

Therefore, the acceptable combination(s) of errors, and its(their) corresponding combination(s) of custom implementations identified in the third step, constitute(s) the required internal accuracies of the program. These internal accuracies are not necessarily the most optimal for an efficient execution of the computer program and can therefore be further analyzed at the fourth step of the method detailed below.

The computer implemented method may further comprise iterating on the following steps, until the target global accuracy is achieved by at least one combination of errors of at least one combination of custom implementations:

- obtaining additional combinations of custom implementations,
- determining additional errors based on said additional combinations of custom implementations,
- comparing said additional errors to the target global accuracy.

In specific embodiments, the at least one resource consuming criterion belongs to the group comprising:

- a worst-case execution time;
- an average execution time;
- a resource usage threshold;
- a combination thereof.

The resource consuming criterion, defined in preliminary step as an input of the method, includes a stop condition corresponding to a threshold for which the efficiency of the program is considered as sufficient. The resource consuming criterion is arbitrary and can encompass one or several criteria, for instance such as a worst-case execution time (WCET) criterion corresponding to the maximum time the execution of the program could take on a given, fixed, hardware platform. In other words, performing WCET analysis of a program means measuring an upper bound of its execution time for the worst combination of inputs values. The resource consuming criterion can also be an average execution time (AET) criterion corresponding to a reference execution for a typical hardware within typical conditions and considering a reference combination of input values. The criterion can also be defined as a resource usage threshold of the program corresponding for instance to the maximum acceptable used memory, network, single/-multiple CPU/GPU of the hardware, etc.

In specific embodiments, the fourth step further comprises exploring a space of the acceptable combinations of custom implementations with a combinatorial search algorithm comprising a fitness function, said fitness function being configured to identify the said acceptable combinations meeting at least one resource consuming criterion.

Combinatorial search algorithms are used to efficiently explore the space of possible and acceptable accuracies combinations, among the ones that achieve the global target accuracy identified in the third step. To guide the exploration, a fitness function is implemented in the combinatorial search algorithm, which is configured to assign scores to solution candidates relative to a problem to be solved. In the present disclosure, the fitness function is built from the at least one resource consuming criterion and from a precomputed database of cost for various versions of function implementations, further depending on the functions accuracy. More precisely, in the present disclosure, the fitness function thus evaluates the adequacy of the identified internal accuracies of functions (or custom implementations) relative to the computational resources and time of the computer program.

In specific embodiments, the combinatorial search algorithm is a genetic algorithm comprising mutations and crossing of genes to explore at least part of the combinations of custom implementations.

The idea of genetic algorithms is to model Natural Selection with mutations and crossing of genes, generations after generations. The genetic algorithm comprises the fitness function, which selects, during a first generation (first iteration), the best custom output combinations according to the fitness function scores. Then, the identified combinations are mixed together, by combining their "genes" during cross-over and mutation phases, creating additional candidates of a next generation.

In specific embodiments, the fitness function enables comparing the acceptable combinations of custom implementations relative to the at least one resource consuming criterion, wherein:

- when the acceptable combinations of custom implementations meet the at least one resource consuming criterion, said acceptable combinations of custom implementations constitute the required internal accuracies of the at least one function;
- when the acceptable combinations of custom implementations do not meet the at least one resource consuming criterion, said acceptable combinations of custom implementations are rejected.

The computer implemented method may further comprise repeating the following steps, until the at least one resource consuming criterion is met by one acceptable combination of custom implementations:

- obtaining additional custom implementations;
- repeating second and third steps until the additional combination of errors achieves the target global accuracy, providing additional acceptable combinations of custom implementations;
- evaluating the execution efficiency of said additional acceptable combinations of custom implementations, as a function of the at least one resource consuming criterion.

When the at least one resource consuming criterion is met, i.e. the stop condition is achieved, by one or several acceptable combination(s) of custom implementation(s), these correspond to the required internal accuracies of the computer program with the required resource efficiency. These combinations then constitute the outputs of the process.

According to a second aspect, the present disclosure relates to a computer program product comprising instructions which, when executed by at least one processor, configure said at least one processor to carry out a method according to any one of the embodiments of the present disclosure.

According to a third aspect, the present disclosure relates to a computer-readable storage medium comprising instructions which, when executed by at least one processor, configure said at least one processor to carry out a method according to any one of the embodiments of the present disclosure.

According to a fourth aspect, the present disclosure relates to a system for determining required internal accuracies of functions implemented in a computer program to reach a target global accuracy of the computer program, said system comprising at least one processor and at least one memory, wherein the at least one processor is configured to carry out a method according to any one of the embodiments of the present disclosure.

## BRIEF DESCRIPTION OF DRAWINGS

The invention will be better understood upon reading the following description, given as an example that is in no way limiting, and made in reference to the figures which show:

- Figure 1 is a diagram representing the main steps of an exemplary embodiment of a computer implemented method for determining required internal accuracies of a computer program,
- Figure 2 is a diagram representing preliminary steps of the computer implemented method,
- Figure 3 is a diagram showing the computer system carrying the computer implemented method.

In these figures, references identical from one figure to another designate identical or analogous elements. For reasons of clarity, the elements shown are not to scale, unless explicitly stated otherwise.

Also, the order of steps represented in these figures is provided only for illustration purposes and is not meant to limit the present disclosure which may be applied with the same steps executed in a different order.

## DESCRIPTION OF EMBODIMENTS

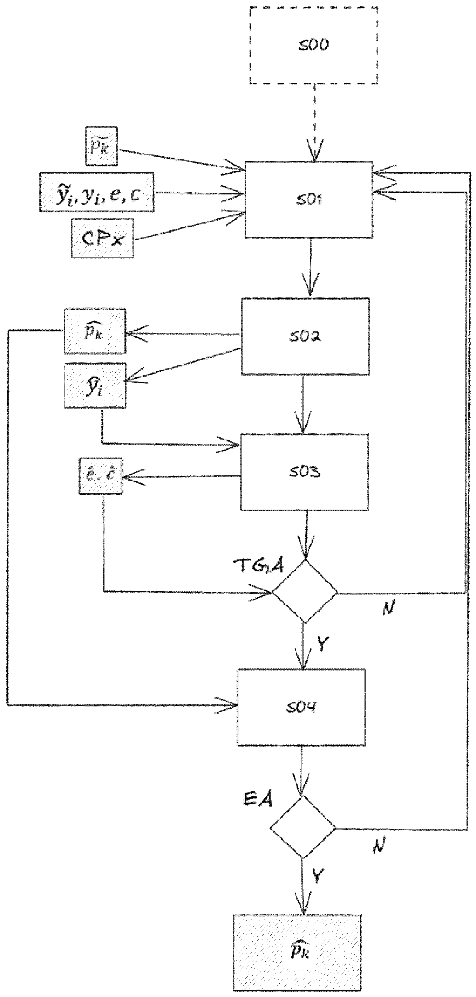

Figure 1 represents schematically the main steps of a computer implemented method 10 for determining required internal accuracies of a computer program.

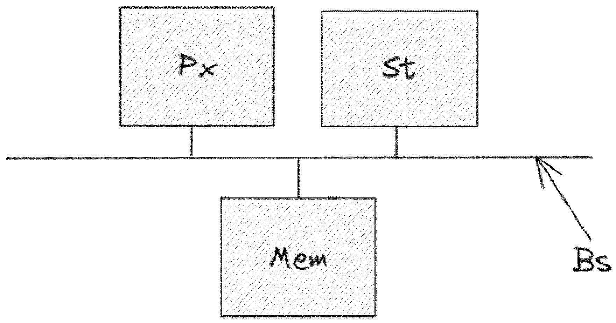

The computer implemented method 10 is carried out by a computer system (represented in figure 3). In preferred embodiments, the computer system comprises one or more processors Px (which may belong to a same computer or to different computers) and one or more storage memories St (magnetic hard disk, optical disk, electronic memory, or any computer readable storage medium) in which a computer program product is stored, in the form of a set of program-code instructions to be executed in order to implement all or part of the steps of the computer implemented method 10. The computer program product is loaded into an execution memory Mem, which allows the processor Px to execute the computer implemented method 10. These components are connected together thru a bus Bs.

Alternatively, or in combination thereof, the computer system can comprise one or more programmable logic circuits (FPGA, PLD, etc.), and/or one or more specialized integrated circuits (ASIC), etc., adapted for implementing all or part of said steps of the computer implemented method 10. In other words, the computer system comprises a set of means configured by software (specific computer program product) and/or by hardware (processor, FPGA, PLD, ASIC, etc.) to implement the steps of the method 10.

The computer program under scrutiny is a source code, which may be written in any computer language, for instance in C, C++, Fortran, java, Python computer languages. For example, the computer program is meant to run on an embedded system, in order to execute tasks in relation with e.g. signal or image processing, automatic control, etc. The computer program includes assignments, control structures (conditional branches, switches, loops, etc.), mathematical operations (addition, multiplication, etc.) and uses or comprises implementations of mathematical functions $f_1$, $f_2$, ..., $f_k$, (for instance exp, log, sin, cos, etc.). For instance, the computer program under scrutiny can be fed with input variables $i_1$, $i_2$, ... , $i_n$ pertaining to their domains $D_1, D_2, ..., D_n$ of floating-point values, where n corresponds to the total number of input variables.

An object of the invention is to determine which implementations (among several possible implementations) of the mathematical functions best fits the requirements of the computer program in terms of calculation precision. For achieving this result, the method 10 is executed. Essentially, this method consists in determining a suitable combination of implementations of some mathematical functions for reaching a target global accuracy TGA of the computer program. This method notably uses an algorithm which allows identifying combinations of custom implementations of the functions (for example a combinatorial search algorithm), and an error comparison algorithm which allows determining whether a given combination meets the target global accuracy TGA or not. In the following, an example of implementation of the method 10 is detailed. Once one or several combinations of custom implementations of the functions is/are determined, these combinations of custom implementations are used to determine whether some efficiency criteria are met (for example in terms of time of execution or in terms of memory allowed for the program execution, etc.).

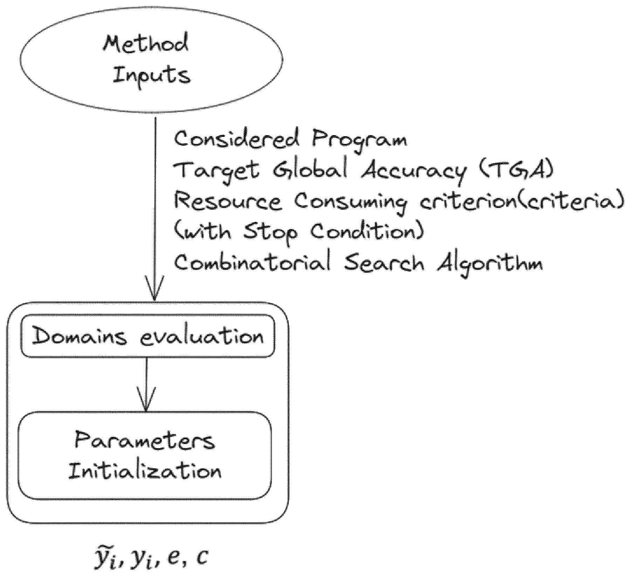

In this example of implementation, as illustrated on Figure 1, the computer implemented method 10 comprises an optional preliminary setup step S00, for receiving several inputs, which are depicted on Figure 2 and more detailed below. In summary, the preliminary step S00 provides reference outputs $\tilde{y}_i$ from reference implementations $p_1, p_2, \dots , p_k$, ideal outputs $y_i$ (from ideal implementations) and maximal error coefficients e and c which are calculated from a random sampling (with $i \leq l, l$ being the number of samples) of values evaluated over over-approximated domains $D_1 \times D_2 \times \dots \times D_n$.

The computer implemented method 10 further comprises at least one iteration of the following steps:

- lowering (S01) the precision of at least one reference implementation ($p_1, p_2, \dots , p_k$) of the at least one function ($f_1, f_2, \dots , f_k$) to obtain custom implementations ( $\widehat{p_1}, \widehat{p_2}, \dots, \widehat{p_k}$ ), of the at least one function ($f_1, f_2, \dots , f_k$),

- obtaining (S02) errors ($e, \hat{e}, c, \hat{c}$) induced by the precision lowering (S01) between the custom implementations ( $\widehat{p_1}, \widehat{p_2}, \dots, \widehat{p_k}$ ) and the reference implementations ($p_1, p_2, \dots , p_k$) as a function of common input values (parameters $x_1, x_2, \dots , x_n$ pertaining to their domains $D_1, D_2, \dots , D_n$),

- obtaining (S03), as a function of said errors ($e, \hat{e}, c, \hat{c}$), a plurality of acceptable combinations of the custom implementations ( $\widehat{p_1}, \widehat{p_2}, \dots, \widehat{p_k}$ ) which allows meeting the target global accuracy (TGA) of the computer program,

- evaluating (S04) an execution efficiency of at least one of said acceptable combinations as a function of at least one resource consuming criterion, said evaluating step delivering the required internal accuracies of at least one function ($f_1, f_2, \dots , f_k$) when said at least one resource consuming criterion is met.

The first step S01 of precision lowering simulation; every time an operation/function call is encountered in the computer program CPx, a stochastic downgrading is performed on the internal accuracies of these operations/functions. The computer program CPx is thus here executed with *custom* implementations $\widehat{p_1}, \widehat{p_2}, \dots, \widehat{p_k}$ of functions $f_1, f_2, \dots , f_k$ with custom lowered internal accuracies. The custom execution of the computer program CPx provides custom outputs $\widehat{y_1}, \widehat{y_2}, \dots, \widehat{y_l}$ for each sample of the random sampling of S00 (i.e. the same input values that the ones used for obtaining the outputs of reference and ideal implementations of the functions in the program CPx).

To provide such custom implementations $\widehat{p_1}, \widehat{p_2}, \dots, \widehat{p_k}$ with lowered accuracies, for instance in one example embodiment, the stochastic downgrading is made with the introduction of a random noise applied on the inputs of functions and operation calls of the computer program CPx. The internal accuracies degradations are cumulative in the computer program CPx.

To illustrate, for example, considering the case of a custom implementation with 20-bit internal accuracy for the cosine function, which is nominally referenced at 53 bits (corresponding to the significand precision). Each time a cosine function is encountered during the custom execution of the computer program CPx, the resulting output is downgraded with random noise from the 21st bit of the 53-bit reference. And at each subsequent call of a cosine function in the computer program CPx, the 21-bit downgrading cumulates and is applied to a previously degraded cosine function output. In other words, this methodology allows simulating the use of less accurate implementations (compared to the reference implementations) while executing the computer program CPx.

Other methods to effectively reduce the precision and to efficiently analyse the reduced precision impact may be implemented for the custom execution of the program: for example, a scraping of the bits above a giving index (from 21st to 53rd bits) can also be used by replacement of the values of these bits by 0. Also, another method could be to directly use one or several downgraded implementations of some functions if such downgraded implementations are available. Other classical tools could also be used for this purpose.

Besides, the first iteration of the S01 step is performed over initial combinations of lowered internal accuracies of the custom implementations $\widehat{p_1}, \widehat{p_2}, \dots, \widehat{p_k}$. The choice of the initial combinations of internal accuracies could be arbitrary or randomized. For example, in a simplified way, the custom combinations of internal accuracies for the cosine/sine functions of the computer program CPx could be: 30/10 bits, 10/30, 15/25, 30/30, etc. (or any other values), and the same can be applied to all the other functions (exponential, logarithm, etc.) and operations in the computer program CPx. To speed up the analysis, it is also possible to guide the choice of initial combinations in order to eliminate aberrant values (e.g. very low internal accuracies if the global result musts meet a high target accuracy and vice versa). In a preferred example, the initial combinations of internal accuracies correspond to a median value of the reference internal accuracies of the computer program CPx. The computer program CPx is ran as many times as the number of custom combinations (in the simplified example above, four times).

From Figure 1, a second step S02 is performed to evaluate a total error, i.e., corresponding to both mathematical functions approximations and floating-point rounding approximation (resulting of the degradation). The total error is estimated between the reference outputs $\tilde{y}$ of the nominal execution (for example, pre-calculated in the preliminary step S00), and the custom outputs $\hat{y}$ of the custom execution, calculated in step S01, with:

$$| \tilde{y} - \hat{y} | \leq \hat{e} \, |\tilde{y}| + \hat{c}$$

Where the values $\hat{e}$ correspond to total error coefficients and the values $\hat{c}$ correspond to the constant part of the error. $\hat{c}$ are concrete absolute values and thus do not depend on the calculation. In the case where $\hat{c} = 0$, the total error classically thus writes as:

$$\hat{e} = \max_{0 \leq i \leq l} \frac{| \hat{y}_i - \tilde{y}_i |}{|\tilde{y}_i|}$$

Otherwise, in the case where $\hat{c} \neq 0$, the total error can be evaluated for instance with interpolation methods and over-approximation on the random sampling, or a mix of both.

The resulting total error coefficients $\hat{e}$ and $\hat{c}$, and maximal error coefficients $e$ and $c$ (precalculated in preliminary step S00), are then separated between the error part $e + \hat{e} + e\hat{e}$ and the constant part $c + \hat{c}$ for each combination of custom implementations. For example, for four custom combinations of internal accuracies for the cosine/sine functions, as exemplified above (i.e., 30/10 bits, 10/30, 15/25, 30/30), values $\hat{e}$ and $\hat{c}$ are calculated for each combination.

These resulting error coefficients are then compared with the TGA in the third step S03. The values achieving the TGA thus constitute acceptable combination(s) of the custom outputs $\widehat{y_1}, \widehat{y_2}, ..., \widehat{y_l}$ provided in the precision lowering step S01. The error values not achieving the TGA constitute rejected combination(s) of the custom outputs $\widehat{y_1}, \widehat{y_2}, ..., \widehat{y_l}$.

The identified acceptable combination(s) of custom outputs $\widehat{y_1}, \widehat{y_2}, ..., \widehat{y_l}$ correspond(s) to the required internal accuracies of the computer program CPx.

In the case of rejected combination(s), as depicted on Figure 1, additional combinations of custom outputs $\widehat{y_1}, \widehat{y_2}, ..., \widehat{y_l}$ with downgraded internal accuracies are generated by a combinatorial search algorithm. The algorithm is used to explore the space of additional possible combination(s) of custom outputs $\widehat{y_1}, \widehat{y_2}, ..., \widehat{y_l}$.

The additional combinations of custom outputs $\widehat{y_1}, \widehat{y_2}, ..., \widehat{y_l}$ depend on the chosen discrete and combinatorial search algorithm. It is possible to consider relying on genetic algorithms, or any relevant types of combinatorial search algorithms, such as greedy algorithms or metaheuristics, or using machine learning methods, alone or in addition.

In a preferred embodiment, a genetic algorithm is used. In this case, the additional mutated combinations of custom outputs are for instance generated by mutations and/or crossing of genes, generations after generations (iteration after iteration).

Taking the example where a precision combination for cosine/sin functions was initially and arbitrarily of 30/10 bits, for example, the combinatorial search algorithm could generate an additional precision test combination of 20/40 bits, or 30/15 bits, or 10/30, etc on the next generation.

The additional combinations of custom outputs are implemented back to the process to step S02 and S03. The steps S01, S02 and S03 are thus performed until acceptable combination(s) of custom outputs achieving the TGA is(are) identified.

Then, from Figure 1, the method 10 comprises an efficiency analysis, at step S04, to evaluate if the identified internal accuracies also ensure an efficient computer program execution in terms of resources, time and other criteria. This analysis is performed by a fitness function relative to the input resource consuming criterion(criteria) on all the identified combinations achieving the TGA. The fitness function is configured to associate a score at each combination, depending on its fit with the chosen resource consuming criterion(criteria). Moreover, achieving the resource consuming criterion(criteria) means that the evaluation of this criterion(these criteria) by the fitness function satisfies a stop condition.

The fitness function, the resource consuming criterion(criteria) and the stop condition are pre-determined and implemented at preliminary step S00.

The combinations of custom implementations identified by the fitness function for also achieving the resource consuming criterion(criteria) thus correspond to the required internal accuracies optimizing the computer program CPx efficiency and constitute the final outputs of the method 10.

The method 10 is configured to stop after the first combination(s) of required internal accuracies are identified to achieve the resource consuming criterion(criteria). For this purpose, the stop condition, for instance, a maximum number of combinations, included within the resource consuming criterion(criteria), corresponds to a threshold for which the efficiency is considered as sufficient.

However, it is also possible to configure the method to iterate the whole process back to step S01, with additional combinations of custom outputs $\widehat{y_1}, \widehat{y_2}, ..., \widehat{y_l}$, generated by the combinatorial search algorithm, and relative to the identified combination(s) of required internal accuracies from step S04. For example, a fixed number of iterations to be reached can be set in the preliminary step S00, to force the method to iterate to potentially find one or several better combination solutions.

As before, the generation of these additional combinations of custom **outputs** $\widehat{y_1}, \widehat{y_2}, ..., \widehat{y_l}$ de-

pends on the chosen algorithm. In a preferred embodiment, the genetic algorithm is used.

The chosen algorithm could be configured to test several configurations of additional combinations, with lower accuracies at each iteration, to identify the most efficient (in the meaning of the resource consuming criterion) combinations of internal accuracies after step S04.

Otherwise, in step S04, the combination(s) of custom implementations which do not achieve the resource consuming criterion(criteria) is(are) rejected. There, the chosen combinatorial search algorithm iterates additional combinations of internal accuracies to provide additional custom outputs $\widehat{y_1}, \widehat{y_2}, ..., \widehat{y_l}$, back to lowering precision step S01.

In an embodiment, the combinatorial search algorithm is configured in this case to generate additional combinations relative to the identified best combinations achieving the TGA at step S03. For example, if cosine/sin precision combination of 30/10 bits is identified as more efficient by the fitness function in step S04 than 5/45 bits, according to their respective scores, the combinatorial search algorithm would test an additional precision combination of 10/30 bits for instance. The additional combinations could also be preferably chosen as low as possible, to better optimize the computer program efficiency, in this case for instance, 25/5 bits.

The method 10 is iterated from step S01 to step S04 until eventually at least one combination of custom implementations is identified by the fitness function to achieve the resource consuming criterion(criteria), i.e., the stop condition is met.

Besides, it is also necessary to foresee the case where no viable solution is found. For example, if the process reaches a very large number of iterations (that could be defined in the S00 preliminary step), it may be considered impossible to find a combination of solutions that enables the TGA and/or reaching the stop condition. This may be the case if the TGA and/or resource consuming criterion(criteria) are theoretically not achievable, for example for hardware other than that recommended, or if too many cost criteria are included, etc. In this case, it is possible to use automatic and/or user-authorized methods, to modify the value of the TGA/criterion, or to indicate that the inputs are not achievable for this computer program CPx, or even to propose the closest internal accuracies solution identified but which does not meet the TGA and/or the criterion, etc.

The computer implemented method 10 can also include several other relevant informative outputs, such as for example a data log of the used memory, computation time for each combination, VPREC (or similar/used tools) outputs from the lowering precision step S03, etc.

As illustrated on Figure 2, the preliminary step S00 comprises receiving the method inputs, such as the considered computer program to be evaluated, the desired TGA, and the resource consuming criterion(criteria) with its associated stop condition. The desired TGA and the resource consuming criterion(criteria) are arbitrary and depend on the application domain. For example, TGA can be defined as a minimum number of bits to be reached, in which case it corresponds to a percentage of error on the result and depends on the size of the input and output data. The combinatorial algorithm/genetic algorithm and the fitness function definition are also precomputed and implemented inside the computer method 10 at this stage.

The preliminary step S00 further comprises preliminary analyses of the computer program CPx. Thus, a first over-approximated computation of the domains of floating-point values at each statement of the analyzed program is performed, especially at the locations of mathematical functions calls. This computation results in a random sampling of values over said domains. It can be done for example with abstract interpretation tools for floating-point arithmetic, an automatic formal method used to automatically verify simple properties of programs.

In the event the considered program is part of a biggest development, domains evaluation can be used to determine the domains of values input variables of the program can take. If the program is independent, this information could be unknown (therefore, the domain is the whole range of floating-point values) or asserted by the developer.

Then, the next phase of the methodology could consist in instrumenting the program in order to execute it on the different combinations of values of the random sampling. For this, a parameters initialization is made, in which the computer program is executed in a nominal execution and, optionally, in an ideal execution.

In the nominal execution, the computer program is executed in the nominal floating-point format provided for the program, for instance in single- or double-precision format, on the precalculated random sampling of the over-approximated domains of floating-point values. The nominal execution results in reference outputs of floating-point numbers $\widetilde{y_1}, \widetilde{y_2}, ..., \widetilde{y_l}$ for the different values of the random sampling.

In the ideal execution, the computer program is executed in an *infinite* or ideal (higher-precision) floating-point format, for instance with an arbitrary very large precision of 100 bits when a nominal precision is in double-precision format or using a double-precision when the nominal precision is in single-precision. It results in ideal outputs $y_1, y_2, ..., y_l$ for the different values of the random sampling. Such ideal outputs are supposed to correspond to the real mathematical results. Such formal calculation is resource-intensive. The ideal execution may not be necessary if there is sufficient confidence in the computer program accuracy.

The maximal error is then estimated between the reference outputs and the ideal outputs of the nominal and ideal executions respectively, with:

$$| y - \tilde{y} | \leq e\,|y| + c$$

Where the values e correspond to the maximal error coefficients and the values $c$ correspond to the constant part. $c$ are concrete absolute values and thus do not depend on the calculation. In the case where $c = 0$, the maximal error thus writes as:

$$e = \max_{0 \leq i \leq l} \frac{| y_i - \tilde{y}_i |}{|y_i|}$$

Otherwise, in the case where $c \neq 0$, the maximum error can be evaluated with interpolation methods and over-approximation on the random sampling.

The resulting outputs of the preliminary step S00, $\tilde{y}_i$, $y_i$, $e$, $c$, are then processed in steps S01 to S04 as described above.

## Claims

1. A computer implemented method (10) for determining required internal accuracies of at least one function $(f_1, f_2, \ldots, f_k)$, implemented in a computer program, to reach a target global accuracy (TGA) of the computer program, wherein the method comprises at least one iteration of the following steps:

    - lowering (S01) the precision of at least one reference implementation $(p_1, p_2, \ldots, p_k)$ of the at least one function $(f_1, f_2, \ldots, f_k)$ to obtain custom implementations ( $\widehat{p_1}, \widehat{p_2}, \ldots, \widehat{p_k}$ ), of the at least one function $(f_1, f_2, \ldots, f_k)$,
    - obtaining (S02) errors $(e, \hat{e}, c, \hat{c})$ induced by the precision lowering (S01) between the custom implementations ( $\widehat{p_1}, \widehat{p_2}, \ldots, \widehat{p_k}$ ) and the reference implementations $(p_1, p_2, \ldots, p_k)$ as a function of common input values,
    - obtaining (S03), as a function of said errors $(e, \hat{e}, c, \hat{c})$, a plurality of acceptable combinations of the custom implementations ( $\widehat{p_1}, \widehat{p_2}, \ldots, \widehat{p_k}$ ) which allows meeting the target global accuracy (TGA) of the computer program,
    - evaluating (S04) an execution efficiency of at least one of said acceptable combinations as a function of at least one resource consuming criterion, said execution efficiency evaluation delivering the required internal accuracies of said at least one function $(f_1, f_2, \ldots, f_k)$ when said at least one resource consuming criterion is met.

2. The method (10) according to claim 1, further comprising a preliminary step (S00) for determining reference errors $(e, c)$, by comparing reference outputs ( $\widetilde{y_1}, \widetilde{y_2}, \ldots, \widetilde{y_l}$ ) of said at least one reference implementation $(p_1, p_2, \ldots, p_k)$ with corresponding ideal outputs $(y_1, y_2, \ldots, y_l)$ of ideal execution of said at least one function $(f_1, f_2, \ldots, f_k)$ using the common input values.

3. The method (10) according to claim 1, wherein the precision lowering step (S01) comprises introducing a random noise on values provided to or provided by the at least one reference implementation $(p_1, p_2, \ldots, p_k)$ to obtain the custom implementations ( $\widehat{p_1}, \widehat{p_2}, \ldots, \widehat{p_k}$ ) with custom outputs ( $\widehat{y_1}, \widehat{y_2}, \ldots, \widehat{y_l}$ ).

4. The method (10) according to claim 3, wherein the errors determination step (S02) comprises calculating errors $\hat{e}$ and $\hat{c}$ as a function of said custom outputs ( $\widehat{y_1}, \widehat{y_2}, \ldots, \widehat{y_l}$ ) and as a function of reference outputs ( $\widetilde{y_1}, \widetilde{y_2}, \ldots, \widetilde{y_l}$ ).

5. The method (10) according to claim 4, wherein the step (S03) further comprises comparing a plurality of combinations of errors $(e, \hat{e}, c, \hat{c})$ relative to the target global accuracy (TGA), wherein:

    - when a combination of errors achieves the target global accuracy (TGA), the corresponding combination of custom implementations is an acceptable combination of custom implementations ( $\widehat{p_1}, \widehat{p_2}, \ldots, \widehat{p_k}$ );
    - when a combination of errors does not achieve the target global accuracy (TGA), the corresponding combination of custom implementations ( $\widehat{p_1}, \widehat{p_2}, \ldots, \widehat{p_k}$ ) is rejected.

6. The method (10) according to claim 1, wherein the method (10) further comprises iterating on the following steps, until the target global accuracy (TGA) is achieved by at least one combination of errors of at least one combinations of custom implementations ( $\widehat{p_1}, \widehat{p_2}, \ldots, \widehat{p_k}$ ):

    - obtaining (S01) additional combinations of custom implementations ( $\widehat{p_1}, \widehat{p_2}, \ldots, \widehat{p_k}$ ),
    - determining (S02) additional errors $(e, \hat{e}, c, \hat{c})$ based on said additional combinations of custom implementations ( $\widehat{p_1}, \widehat{p_2}, \ldots, \widehat{p_k}$ ),

- comparing (S03) said additional errors (*e, ê, c, ĉ*) to the target global accuracy (TGA).

7. The method (10) according to claim 1, wherein the at least one resource consuming criterion belong to the group comprising:

   - a worst-case execution time (WCET);
   - an average execution time (AET);
   - a resource usage threshold;
   - a combination thereof.

8. The method (10) according to any of claims 1 to 7, wherein the step (S04) further comprises exploring a space of the acceptable combinations of custom implementations ( $\widehat{p_1}, \widehat{p_2}, ..., \widehat{p_k}$ ) with a combinatorial search algorithm comprising a fitness function, said fitness function being configured to identify the said acceptable combinations meeting the at least one resource consuming criterion.

9. The method (10) according to claim 8, wherein the combinatorial search algorithm is a genetic algorithm comprising mutations and crossing of genes to explore at least part of the combinations of custom implementations ( $\widehat{p_1}, \widehat{p_2}, ..., \widehat{p_k}$ ).

10. The method (10) according to claim 8, wherein the fitness function enables comparing the acceptable combinations of custom implementations ( $\widehat{p_1}, \widehat{p_2}, ..., \widehat{p_k}$ ) relative to the at least one resource consuming criterion, wherein:

    - when the acceptable combinations of custom implementations ( $\widehat{p_1}, \widehat{p_2}, ..., \widehat{p_k}$ ) meet the at least one resource consuming criterion, said acceptable combinations of custom implementations constitute the required internal accuracies of the at least one function (*f_1, f_2, ... , f_k*);
    - when the acceptable combinations of custom implementations ( $\widehat{p_1}, \widehat{p_2}, ..., \widehat{p_k}$ ) do not meet the at least one resource consuming criterion, said acceptable combinations of custom implementations ( $\widehat{p_1}, \widehat{p_2}, ..., \widehat{p_k}$ ) are rejected.

11. The method (10) according to claim 7 or claim 8, wherein the method (10) further comprises repeating the following steps, until the at least one resource consuming criterion is met by one acceptable combination of custom implementations ( $\widehat{p_1}, \widehat{p_2}, ..., \widehat{p_k}$ ):

- obtaining (S01) additional custom implementations ( $\widehat{p_1}, \widehat{p_2}, ..., \widehat{p_k}$ ),
- repeating steps (S02) and (S03) until the additional combination of errors achieves the target global accuracy (TGA), providing additional acceptable combinations of custom implementations ( $\widehat{p_1}, \widehat{p_2}, ..., \widehat{p_k}$ ),
- evaluating (S04) the execution efficiency of said additional acceptable combinations of custom implementations ( $\widehat{p_1}, \widehat{p_2}, ..., \widehat{p_k}$ ), as a function of the at least one resource consuming criterion.

12. Computer program product comprising instructions which, when executed by at least one processor, configure said at least one processor to carry out a method according to any one of claims 1 to 11.

13. Computer-readable storage medium comprising instructions which, when executed by at least one processor, configure said at least one processor to carry out a method according to any one of claims 1 to 11.

14. System for determining required internal accuracies of functions implemented in a computer program to reach a target global accuracy of the computer program, said system comprising at least one processor and at least one memory, wherein the at least one processor is configured to carry out a method (10) according to any one of claims 1 to 11.

**Patentansprüche**

1. Computerimplementiertes Verfahren (10) zum Bestimmen erforderlicher interner Genauigkeiten wenigstens einer Funktion (*f_1, f_2, ..., f_k*), welche in einem Computerprogramm implementiert ist, um eine Ziel-Globalgenauigkeit (TGA) des Computerprogramms zu erreichen, wobei das Verfahren wenigstens eine Iteration der folgenden Schritte umfasst:

   - Senken (S01) der Genauigkeit wenigstens einer Referenzimplementierung (*p_1, p_2, ..., p_k*) der wenigstens einen Funktion (*f_1, f_2, ..., f_k*), um benutzerdefinierte Implementierungen ( $\widehat{p_1}, \widehat{p_2}, ..., \widehat{p_k}$ ) der wenigstens einen Funktion (*f_1, f_2, ..., f_k*) zu erhalten,
   - Erhalten (S02) von Fehlern (*e, ê, c, ĉ*), welche durch die Genauigkeitssenkung (S01) zwischen den benutzerdefinierten Implementierungen ( $\widehat{p_1}, \widehat{p_2}, ..., \widehat{p_k}$ ) und den Referenzimple-

mentierungen ($p_1$, $p_2$, ..., $p_k$) als eine Funktion gemeinsamer Eingabewerte,

- Erhalten (S03), als eine Funktion der Fehler (e, ê, c, ĉ), einer Mehrzahl von akzeptablen Kombinationen der benutzerdefinierten Implementierungen ( $\widehat{p_1}$, $\widehat{p_2}$, ..., $\widehat{p_k}$ ), welche es erlauben, die Ziel-Globalgenauigkeit (TGA) des Computerprogramms zu erfüllen,

- Auswerten (S04) einer Ausführungseffizienz wenigstens einer der akzeptablen Kombinationen als eine Funktion wenigstens einem ressourcenverbrauchenden Kriterium, wobei die Ausführungseffizienzauswertung die erforderlichen internen Genauigkeiten der wenigstens einen Funktion ($f_1$, $f_2$, ..., $f_k$) liefert, wenn das wenigstens eine ressourcenverbrauchende Kriterium erfüllt ist.

2. Verfahren (10) nach Anspruch 1, welches ferner einen vorbereitenden Schritt (S00) zum Bestimmen von Referenzfehlern (e, c) umfasst, durch Vergleichen von Referenzausgaben ( $\widetilde{y_1}$, $\widetilde{y_2}$, ..., $\widetilde{y_l}$ ) der wenigstens einen Referenzimplementierung ($p_1$, $p_2$, ..., $p_k$) mit entsprechenden idealen Ausgaben ($y_1$, $y_2$, ..., $y_l$) einer idealen Ausführung der wenigstens einen Funktion ($f_1$, $f_2$, ..., $f_k$) unter Verwendung der gemeinsamen Eingabewerte.

3. Verfahren (10) nach Anspruch 1, wobei der Genauigkeitssenkungsschritt (S01) ein Einleiten eines zufälligen Rauschens in Werte umfasst, welche bereitgestellt sind für oder bereitgestellt sind durch die wenigstens eine Referenzimplementierung ($p_1$, $p_2$, ..., $p_k$), um die benutzerdefinierten Implementierungen ( $\widehat{p_1}$, $\widehat{p_2}$, ..., $\widehat{p_k}$ ) mit benutzerdefinierten Ausgaben ( $\widehat{y_1}$, $\hat{y}$, ..., $\widehat{y_l}$ ) zu erhalten.

4. Verfahren (10) nach Anspruch 3, wobei der Fehlerbestimmungsschritt (S02) ein Berechnen von Fehlern ê und ĉ, als eine Funktion der benutzerdefinierten Ausgaben ( $\widehat{y_1}$, $\hat{y}$, ..., $\widehat{y_l}$ ) und als eine Funktion von Referenzausgaben ( $\widetilde{y_1}$, $\widetilde{y_2}$, ..., $\widetilde{y_l}$ ) umfasst.

5. Verfahren (10) nach Anspruch 4, wobei der Schritt (S03) ferner ein Vergleichen einer Mehrzahl von Kombinationen von Fehlern (e, ê, c, ĉ), relativ zu der Ziel-Globalgenauigkeit (TGA) umfasst, wobei:

- wenn eine Kombination von Fehlern die Ziel-Globalgenauigkeit (TGA) erzielt, die entsprechende Kombination von benutzerdefinierten Implementierungen eine akzeptable Kombination benutzerdefinierter Implementierungen ( $\widehat{p_1}$, $\widehat{p_2}$, ..., $\widehat{p_k}$ ) ist;

- wenn eine Kombination von Fehlern die Ziel-Globalgenauigkeit (TGA) nicht erzielt, die entsprechende Kombination benutzerdefinierter Implementierungen ( $\widehat{p_1}$, $\widehat{p_2}$, ..., $\widehat{p_k}$ ) zurückgewiesen wird.

6. Verfahren (10) nach Anspruch 1, wobei das Verfahren (10) ferner ein Iterieren der folgenden Schritte umfasst, bis die Ziel-Globalgenauigkeit (TGA) durch wenigstens eine Kombination von Fehlern wenigstens einer Kombination benutzerdefinierter Implementierungen ( $\widehat{p_1}$, $\widehat{p_2}$, ..., $\widehat{p_k}$ ) erzielt wird:

- Erhalten (S01) zusätzlicher Kombinationen benutzerdefinierter Implementierungen ( $\widehat{p_1}$, $\widehat{p_2}$, ..., $\widehat{p_k}$ ),
- Bestimmen (S02) zusätzlicher Fehler (e, ê, c, ĉ), auf Grundlage der zusätzlichen Kombinationen benutzerdefinierter Implementierungen ( $\widehat{p_1}$, $\widehat{p_2}$, ..., $\widehat{p_k}$ ),
- Vergleichen (S03) der zusätzlichen Fehler (e, ê, c, ĉ), mit der Ziel-Globalgenauigkeit (TGA).

7. Verfahren (10) nach Anspruch 1, wobei das wenigstens eine ressourcenverbrauchende Kriterium zu der Gruppe gehört, umfassend:

- eine Worst-Case-Ausführungszeit (WCET);
- eine durchschnittliche Ausführungszeit (AET);
- einen Ressourcenverbrauchsschwellenwert;
- eine Kombination davon.

8. Verfahren (10) nach einem der Ansprüche 1 bis 7, wobei der Schritt (S04) ferner ein Erforschen eines Raums der akzeptablen Kombinationen benutzerdefinierter Implementierungen ( $\widehat{p_1}$, $\widehat{p_2}$, ..., $\widehat{p_k}$ ) mit einem kombinatorischen Suchalgorithmus umfasst, welcher eine Fitnessfunktion umfasst, wobei die Fitnessfunktion dazu eingerichtet ist, die akzeptablen Kombinationen zu identifizieren, welche das wenigstens eine ressourcenverbrauchende Kriterium erfüllen.

9. Verfahren (10) gemäß Anspruch 8, wobei der kombinatorische Suchalgorithmus ein genetischer Algorithmus ist, welcher Mutationen und Kreuzungen von Genen umfasst, um wenigstens einen Teil der Kombinationen benutzerdefinierter Implementierungen (

$\widehat{p_1}, \widehat{p_2}, ..., \widehat{p_k}$ ) zu erforschen.

10. Verfahren (10) nach Anspruch 8, wobei die Fitnessfunktion ein Vergleichen der akzeptablen Kombinationen benutzerdefinierter Implementierungen (

$\widehat{p_1}, \widehat{p_2}, ..., \widehat{p_k}$ ) relativ zu dem wenigstens einen ressourcenverbrauchenden Kriterium aktiviert, wobei:

    - wenn die akzeptablen Kombinationen benutzerdefinierter Implementierungen (

$\widehat{p_1}, \widehat{p_2}, ..., \widehat{p_k}$ ) das wenigstens eine ressourcenverbrauchende Kriterium erfüllen, die akzeptablen Kombinationen benutzerdefinierter Implementierungen die erforderlichen internen Genauigkeiten der wenigstens einen Funktion ($f_1, f_2, ..., f_k$) bilden;
    - wenn die akzeptablen Kombinationen benutzerdefinierter Implementierungen (

$\widehat{p_1}, \widehat{p_2}, ..., \widehat{p_k}$ ) das wenigstens eine ressourcenverbrauchende Kriterium nicht erfüllen, die akzeptablen Kombinationen benutzerdefinierter Implementierungen (

$\widehat{p_1}, \widehat{p_2}, ..., \widehat{p_k}$ ) zurückgewiesen werden.

11. Verfahren (10) nach Anspruch 7 oder Anspruch 8, wobei das Verfahren (10) ferner ein Wiederholen der folgenden Schritte umfasst, bis das wenigstens eine ressourcenverbrauchende Kriterium durch eine akzeptable Kombination benutzerdefinierter Implementierungen ( $\widehat{p_1}, \widehat{p_2} ..., \widehat{p_k}$ ) erfüllt ist:

    - Erhalten (S01) zusätzlicher benutzerdefinierter Implementierungen ( $\widehat{p_1}, \widehat{p_2}, ..., \widehat{p_k}$ ),
    - Wiederholen der Schritte (S02) und (S03), bis die zusätzliche Kombination von Fehlern die Ziel-Globalgenauigkeit (TGA) erzielt, Bereitstellen zusätzlicher akzeptabler Kombinationen benutzerdefinierter Implementierungen (

$\widehat{p_1}, \widehat{p_2}, ..., \widehat{p_k}$ ),
    - Auswerten (S04) der Ausführungseffizienz der zusätzlichen akzeptablen Kombinationen benutzerdefinierter Implementierungen (

$\widehat{p_1}, \widehat{p_2}, ..., \widehat{p_k}$ ), als eine Funktion des wenigstens einen Ressourcenverbrauchskriteriums.

12. Computerprogrammprodukt, umfassend Anweisungen, welche, wenn sie von wenigstens einem Prozessor ausgeführt werden, den wenigstens einen Prozessor einrichten, um ein Verfahren nach einem der Ansprüche 1 bis 11 durchzuführen.

13. Computerlesbares Speichermedium, umfassend Anweisungen, welche, wenn sie von wenigstens einem Prozessor ausgeführt werden, den wenigstens einen Prozessor einrichten, um ein Verfahren nach einem der Ansprüche 1 bis 11 durchzuführen.

14. System zum Bestimmen erforderlicher interner Genauigkeiten von Funktionen, welche in einem Computerprogramm implementiert sind, um eine Ziel-Globalgenauigkeit des Computerprogramms zu erreichen, wobei das System wenigstens einen Prozessor und wenigstens einen Speicher umfasst, wobei der wenigstens eine Prozessor dazu eingerichtet ist, ein Verfahren (10) nach einem der Ansprüche 1 bis 11 durchzuführen.


**Revendications**

1. Procédé (10) mis en œuvre par ordinateur pour déterminer des précisions internes requises d'au moins une fonction ($f_1, f_2, ..., f_k$), mise en œuvre dans un programme d'ordinateur, pour atteindre une précision globale cible (TGA) du programme d'ordinateur, dans lequel le procédé comprend au moins une itération des étapes suivantes :

    - abaisser (S01) la précision d'au moins une implémentation de référence ($p_1, p_2, ..., p_k$) de l'au moins une fonction ($f_1, f_2, ..., f_k$) pour obtenir des implémentations personnalisées (

$\widehat{p_1}, \widehat{p_2}, ..., \widehat{p_k}$ ), de l'au moins une fonction ($f_1, f_2, ..., f_k$),
    - obtenir (S02) des erreurs ($e, \hat{e}, c, \hat{c}$) induites par l'abaissement de précision (S01) entre les implémentations personnalisées (

$\widehat{p_1}, \widehat{p_2}, ..., \widehat{p_k}$ ) et les implémentations de référence ($p_1, p_2, ..., p_k$) en fonction de valeurs d'entrée communes,
    - obtenir (S03), en fonction desdites erreurs ($e, \hat{e}, c, \hat{c}$), une pluralité de combinaisons acceptables des implémentations personnalisées (

$\widehat{p_1}, \widehat{p_2}, ..., \widehat{p_k}$ ) qui permettent de respecter la précision globale cible (TGA) du programme d'ordinateur,
    - évaluer (S04) une efficacité d'exécution d'au moins l'une desdites combinaisons acceptables en fonction d'au moins un critère de consommation de ressources, ladite évaluation d'efficacité d'exécution délivrant les précisions internes requises de ladite au moins une fonction ($f_1, f_2, ...,$

$f_k$) lorsque ledit au moins un critère de consommation de ressources est rempli.

2. Procédé (10) selon la revendication 1, comprenant en outre une étape préliminaire (S00) pour déterminer des erreurs de référence ($e, c$), en comparant des sorties de référence ( $\widetilde{y_1}, \widetilde{y_2}, ..., \widetilde{y_l}$ )de ladite au moins une implémentation de référence ($p_1$, $p_2$, ..., $p_k$) à des sorties idéales correspondantes ($y_1, y_2, ..., y_l$) d'exécution idéale de ladite au moins une fonction ($f_1, f_2, ..., f_k$) à l'aide des valeurs d'entrée communes.

3. Procédé (10) selon la revendication 1, dans lequel abaisser la précision (S01) comprend introduire un bruit aléatoire sur des valeurs fournies à ou fournies par l'au moins une implémentation de référence ($p_1$, $p_2$, ..., $p_k$) pour obtenir les implémentations personnalisées ( $\widehat{p_1}, \widehat{p_2}, ..., \widehat{p_k}$ ) avec des sorties personnalisées ( $\widehat{y_1}, \widehat{y_2}, ..., \widehat{y_l}$ ).

4. Procédé (10) selon la revendication 3, dans lequel déterminer les erreurs (S02) comprend calculer des erreurs $\hat{e}$ et $\hat{c}$ en fonction desdites sorties personnalisées ( $\widehat{y_1}, \widehat{y_2}, ..., \widehat{y_l}$ ) et en fonction de sorties de référence ( $\widetilde{y_1}, \widetilde{y_2}, ..., \widetilde{y_l}$ ).

5. Procédé (10) selon la revendication 4, dans lequel l'étape (S03) comprend en outre comparer une pluralité de combinaisons d'erreurs ($e, \hat{e}, c, \hat{c}$) à la précision globale cible (TGA), dans laquelle :

   - lorsqu'une combinaison d'erreurs atteint la précision globale cible (TGA), la combinaison correspondante d'implémentations personnalisées est une combinaison acceptable d'implémentations personnalisées ( $\widehat{p_1}, \widehat{p_2}, ..., \widehat{p_k}$ ) ;
   - lorsqu'une combinaison d'erreurs n'atteint pas la précision globale cible (TGA), la combinaison correspondante d'implémentations personnalisées ( $\widehat{p_1}, \widehat{p_2}, ..., \widehat{p_k}$ ) est rejetée.

6. Procédé (10) selon la revendication 1, dans lequel le procédé (10) comprend en outre itérer les étapes suivantes, jusqu'à ce que la précision globale cible (TGA) soit atteinte par au moins une combinaison d'erreurs d'au moins une combinaison d'implémentations personnalisées ( $\widehat{p_1}, \widehat{p_2}, ..., \widehat{p_k}$ ) :

   - obtenir (S01) des combinaisons supplémentaires d'implémentations personnalisées ( $\widehat{p_1}, \widehat{p_2}, ..., \widehat{p_k}$ ),
   - déterminer (S02) des erreurs supplémentaires ($e, \hat{e}, c, \hat{c}$) sur la base desdites combinaisons supplémentaires d'implémentations personnalisées ( $\widehat{p_1}, \widehat{p_2}, ..., \widehat{p_k}$ ),
   - comparer (S03) lesdites erreurs supplémentaires ($e, \hat{e}, c, \hat{c}$) à la précision globale cible (TGA).

7. Procédé (10) selon la revendication 1, dans lequel l'au moins un critère de consommation de ressources appartient au groupe comprenant :

   - un temps d'exécution dans le pire des cas (WCET) ;
   - un temps d'exécution moyen (AET) ;
   - un seuil d'utilisation de ressources ;
   - une combinaison de ceux-ci.

8. Procédé (10) selon l'une quelconque des revendications 1 à 7, dans lequel l'étape (S04) comprend en outre explorer un espace des combinaisons acceptables d'implémentations personnalisées ( $\widehat{p_1}, \widehat{p_2}, ..., \widehat{p_k}$ ) avec un algorithme de recherche combinatoire comprenant une fonction d'adaptation, ladite fonction d'adaptation étant configurée pour identifier lesdites combinaisons acceptables remplissant l'au moins un critère de consommation de ressources.

9. Procédé (10) selon la revendication 8, dans lequel l'algorithme de recherche combinatoire est un algorithme génétique comprenant des mutations et un croisement de gènes pour explorer au moins une partie des combinaisons d'implémentations personnalisées ( $\widehat{p_1}, \widehat{p_2}, ..., \widehat{p_k}$ ).

10. Procédé (10) selon la revendication 8, dans lequel la fonction d'adaptation permet de comparer les combinaisons acceptables d'implémentations personnalisées ( $\widehat{p_1}, \widehat{p_2}, ..., \widehat{p_k}$ ) à l'au moins un critère de consommation de ressources, dans lequel :

   - lorsque les combinaisons acceptables d'implémentations personnalisées ( $\widehat{p_1}, \widehat{p_2}, ..., \widehat{p_k}$ ) remplissent l'au moins un critère de consommation de ressources, lesdites combinaisons acceptables d'implémentations personnalisées constituent les précisions internes requises de l'au moins une fonction ($f_1, f_2, ..., f_k$) ;
   - lorsque les combinaisons acceptables d'implé-

mentations personnalisées ( $\widehat{p_1}, \widehat{p_2}, ..., \widehat{p_k}$ ) ne remplissent pas l'au moins un critère de consommation de ressources, lesdites combinaisons acceptables d'implémentations personnalisées ( $\widehat{p_1}, \widehat{p_2}, ..., \widehat{p_k}$ ) sont rejetées.

11. Procédé (10) selon la revendication 7 ou 8, dans lequel le procédé (10) comprend en outre répéter les étapes suivantes, jusqu'à ce que l'au moins un critère de consommation de ressources soit rempli par une combinaison acceptable d'implémentations personnalisées ( $\widehat{p_1}, \widehat{p_2}, ..., \widehat{p_k}$ ) : ( $\widehat{p_1}, \widehat{p_2}, ..., \widehat{p_k}$ )- obtenir (S01) des implémentations personnalisées supplémentaires,

   - répéter les étapes (S02) et (S03) jusqu'à ce que la combinaison supplémentaire d'erreurs atteigne la précision globale cible (TGA), fournissant des combinaisons acceptables supplémentaires d'implémentations personnalisées ( $\widehat{p_1}, \widehat{p_2}, ..., \widehat{p_k}$ ),
   - évaluer (S04) l'efficacité d'exécution desdites combinaisons acceptables supplémentaires d'implémentations personnalisées ( $\widehat{p_1}, \widehat{p_2}, ..., \widehat{p_k}$ ), en fonction de l'au moins un critère de consommation de ressources.

12. Produit de programme d'ordinateur comprenant des instructions qui, lorsqu'elles sont exécutées par au moins un processeur, configurent ledit au moins un processeur pour réaliser un procédé selon l'une quelconque des revendications 1 à 11.

13. Support de stockage lisible par ordinateur comprenant des instructions qui, lorsqu'elles sont exécutées par au moins un processeur, configurent ledit au moins un processeur pour réaliser un procédé selon l'une quelconque des revendications 1 à 11.

14. Système de détermination de précisions internes requises de fonctions mises en œuvre dans un programme d'ordinateur pour atteindre une précision globale cible du programme d'ordinateur, ledit système comprenant au moins un processeur et au moins une mémoire, dans lequel l'au moins un processeur est configuré pour réaliser un procédé (10) selon l'une quelconque des revendications 1 à 11.

Method
Inputs

Considered Program
Target Global Accuracy (TGA)
Resource Consuming criterion(criteria)
(with Stop Condition)
Combinatorial Search Algorithm

Domains evaluation

Parameters
Initialization

$\widetilde{y}_i, y_i, e, c$

**EP 4 538 907 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 4235397 A